# FASCICULE DE BREVET EUROPEEN

(11) **EP 2 552 189 B1**
(45) Date de publication et mention de la délivrance du brevet: **01.06.2016**
(21) Numéro de dépôt: 11719308.6
(22) Date de dépôt: 29.03.2011
(51) Int. Cl.: A01G 9/14, B32B 27/06, B32B 27/08, B32B 27/30, B32B 27/32

(54) **FILMS FLUORÉS MULTICOUCHE**
MEHRSCHICHTIGE FLUORIERTE FOLIEN
MULTILAYER FLUORINATED FILMS

(30) Priorité: 30.03.2010 FR 1052325
(43) Date de publication de la demande: 06.02.2013
(73) Titulaire: Arkema France, 92700 Colombes (FR)
(72) Inventeur: BONNET, Anthony, F-69720 Saint-laurent-de-Mure (FR); DEVAUX, Nicolas, 69003 Lyon (FR); BIZET, Stephane, 27170 Barc (FR); RIVAS, Nadine, F-76500 La Londe (FR); GODEFROY, Frédéric, F-76480 Mesnil Sous Jumieges (FR)
(74) Mandataire: Albani, Dalila
(86) Numéro de dépôt international: PCT/FR2011/050688
(87) Numéro de publication internationale: WO 2011/121228

(56) Documents cités:
- WO-A1-2009/101343

## Description

La présente invention concerne des films multicouche en polymères fluorés possédant des propriétés les rendant aptes à une utilisation dans le domaine agricole notamment comme films de couverture de serres (ou films de serre).

De façon générale, les films de serre doivent présenter de multiples propriétés : mécaniques, telles que : résistance à la déchirure, résistance au fluage, capacité d'étirage; optiques, telles que la transmission de la lumière, résistance aux rayons UV ; de résistance chimique ; de durabilité ; de résistance thermique (capacité élevée à réfléchir les rayons infra-rouges dans la serre durant la nuit en conservant l'énergie thermique à l'intérieur). Par ailleurs, pour couvrir les serres modernes de grandes dimensions, il est essentiel de disposer de films de largeur importante, par exemple de 1 m à 7 m de largeur.

Parmi les films utilisés comme couverture de serre, on retrouve des films en polyéthylène de haute densité (HDPE). Ces films sont fabriqués par soufflage de gaine, ce qui permet d'obtenir des films de largeurs importantes (allant jusqu'à 11 m de circonférence). Le principal inconvénient des films de serre en HDPE réside en leur résistance UV limitée dans le temps (environ 4 ans), ce qui impose le changement fréquent de ces films.

Les films en copolymère éthylène - tétrafluoroéthylène (ETFE) pallient cet inconvénient, car ils ont une durée d'utilisation comme films de serre de jusqu'à 20 ans. De plus, ils présentent d'autres avantages tels qu'une bonne résistance au fluage à basse température et la capacité de s'auto nettoyer. En revanche, la largeur de ces films, fabriqués par la technique du film coulé, ne dépasse pas 2,3 m environ. Pour obtenir un film apte à couvrir une serre entière il est donc nécessaire de souder plusieurs feuilles de films ensemble sur leur largeur, ce qui augmente les coûts de fabrication. Un autre inconvénient des films en ETFE est leur capacité très limitée à s'étirer, ce qui rend difficile leur pose sur le squelette métallique des serres.

On connaît aussi des films en polyéthylène de haute densité (LDPE), utilisés comme matériel agricole, seuls ou comme matériaux d'enduction sur un support plus solide tel que le polypropylène ou encore dans des structures multicouche co-extrudées avec des copolymères éthylène-vinylacétate (EVA). Aucun de ces films ne répond à toutes les exigences énumérées ci-dessus. Leur tenue aux ultraviolets est faible et ne permet pas une utilisation en extérieur supérieure à 5 ans.

Il est également connu d'employer des polymères fluorés, notamment à base de fluorure de vinylidène, pour fabriquer des films mono-couche pour des applications agricoles. Les films mono-couche PVDF (poly fluorure de vinylidène) ou copolymères VF2/HFP (fluorure de vinylidène / hexafluoropropylène), obtenus par soufflage de gaine ou par la technique du film coulé, présentent de bonnes propriétés mécaniques, optiques, résistance chimique et durabilité, si bien que ce sont de bons candidats pour l'application serres agricoles. La résistance à la déchirure de ces films est toutefois insuffisante, surtout dans le sens d'extrusion (MD). Aucune modification apportée au produit ou au procédé de transformation n'a permis d'améliorer significativement la résistance à la déchirure MD.

Il serait donc souhaitable de disposer de films plastiques pour application comme couverture de serre qui, en plus des caractéristiques générales exposées plus haut, présentent de bonnes propriétés de résistance à la déchirure, surtout dans le sens d'extrusion.

Un des objets de la présente invention consiste en des films multicouche en polymères fluorés, comprenant au moins 3 couches, dont une couche A en un premier copolymère de fluorure de vinylidène ayant une température de cristallisation TcA, et une couche B en un deuxième copolymère de fluorure de vinylidène ayant une température de cristallisation TcB, TcA étant supérieure à TcB, les couches A et B étant alternes, la couche A étant placée à l'extérieur et la couche B entre deux couches A.

Un autre objet de l'invention concerne l'utilisation du film selon l'invention comme matériau de couverture agricole notamment comme couverture de serres.

D'autres caractéristiques et avantages de l'invention apparaîtront à la lecture de l'exposé qui suit.

Il a maintenant été trouvé qu'en utilisant des structures multicouche en copolymères de fluorure de vinylidène (VDF) et en faisant un choix judicieux des produits composants ces couches, le nombre de couches et les épaisseurs, on obtient une amélioration significative de la résistance à la déchirure MD. Une telle amélioration n'est pas connue de l'homme de l'art, même pour d'autres produits tels que le polyéthylène.

Selon un premier aspect, l'invention a trait à des films fluorés multicouche comprenant au moins 3 couches, dont une couche A en un premier copolymère de fluorure de vinylidène ayant une température de cristallisation TcA, et une couche B en un deuxième copolymère de fluorure de vinylidène ayant une température de cristallisation TcB, TcA étant supérieure à TcB, les couches A et B étant alternes, la couche A étant placée à l'extérieur et la couche B entre deux couches A.

Les copolymères fluorés entrant dans la composition du film selon l'invention sont préparés par copolymérisation du fluorure de vinylidène (VDF, CH₂=CF₂) avec l'hexafluoropropylène (HFP).

Le comonomère est l'HFP car il copolymérise bien avec le VDF et permet d'apporter de bonnes propriétés thermomécaniques.

Avantageusement, les copolymères de VDF présentent une viscosité allant de 100 Pa.s à 3000 Pa.s, la viscosité étant mesurée à 230°C, à un gradient de cisaillement de 100 s⁻¹ à l'aide d'un rhéomètre capillaire. En effet, ce type de polymère est bien adapté à l'extrusion. De préférence, les polymères ont une viscosité allant de 500 Pa.s à 2900 Pa.s, la viscosité étant mesurée à 230°C, à un gradient de cisaillement de 100 s⁻¹ à l'aide d'un rhéomètre capillaire.

Les copolymères VDF-HFP contiennent au moins 50% en masse de VDF, avantageusement au moins 75% en masse de VDF et de préférence au moins 80% en masse de VDF. Ces copolymères fluorés présentent en effet une bonne résistance chimique, notamment aux UV, et ils se transforment facilement (plus facilement que le PTFE ou les copolymères ETFE) en vue de former des films. On peut citer par exemple plus particulièrement les copolymères de VDF contenant plus de 75% de VDF et le complément de HFP suivants : KYNAR^{®} 710, KYNAR^{®} 720, KYNAR^{®} 740, KYNAR FLEX^{®} 2500, KYNAR FLEX^{®} 2800, commercialisés par la société ARKEMA.

Le film selon l'invention comprend au moins 3 couches dont une couche A en un premier copolymère de fluorure de vinylidène ayant une température de cristallisation TcA, et une couche B en un deuxième copolymère de fluorure de vinylidène ayant une température de cristallisation TcB. Les couches A et B sont toutes les deux constituées de copolymères fluorés tels que décrits plus haut ; ces copolymères fluorés diffèrent entre eux par la température de cristallisation et/ou le module élastique. Avantageusement, TcA est supérieure à TcB. Les couches A et B sont alternées dans le film selon l'invention de sorte à mettre la couche la plus rigide à l'extérieur, pour former des structures du type A-B-A ou A-B-A-B-A ou A-B-A-B-A-B-A. Cette structure multicouche alternée conduit à une amélioration significative des propriétés mécaniques du film ainsi obtenu, notamment de sa résistance à la déchirure dans le sens de l'extrusion.

Si on désigne par E_{A} le module élastique de la couche A, et par E_{B} le module élastique de la couche B (E_{A} et E_{B} étant mesurés en Mpa), le film selon l'invention se caractérise aussi en ce que E_{A} est supérieur à E_{B}. Le module élastique est mesuré par exemple selon le test ISO 178.

De préférence, le film selon l'invention présente un taux massique de couche B compris entre 5 et 50%. Dans une variante particulièrement préférée, le film comprend entre 10 et 35% de couche B.

De manière caractéristique, dans le film selon l'invention la couche A est un copolymère VF2/HFP ayant une température de fusion d'au moins 140°C (par exemple le KYNAR FLEX^{®} 2800), et la couche B est un copolymère VF2/HFP ayant une température de fusion inférieure à 125°C (par exemple le KYNAR FLEX^{®} 2500).

Le film selon l'invention a une épaisseur de 50 à 1000 µm; la couche A a une épaisseur de 5 à 250 µm et la couche B a une épaisseur de 1 à 50 µm De préférence, le film a une épaisseur de 5 à 200 µm, avec une couche A d'épaisseur comprise entre 20 et 50 µm et une couche B d'épaisseur comprise entre 5 et 50 µm.

Avantageusement, le film selon l'invention est exempt d'acrylate.

A la différence d'autres films à base de polymères fluorés connus, par exemple ceux décrits dans le document EP 1.090.955 qui comprennent des copolymères de TFE et d'un autre monomère tel que l'éthylène ou le propylène, le film multicouches selon l'invention est composé intégralement (à 100% en poids) de polymères fluorés. Le film selon l'invention est donc exempt d'oléfines.

A la différence du film tricouche à base de polymères fluorés décrit dans le document EP 733 475, qui comprend une structure ABC comprenant :
- une 1^{ère} couche de composition A comprenant un polymère fluoré ;
- une 2^{ème} couche de composition B comprenant un polymère fluoré chargé, et
- une 3^{ème} couche de composition C comprenant un polymère fluoré C,
le film multicouche selon l'invention se caractérise en ce que chacune des couches est constituée d'un copolymère de VDF, alors que les exemples de ce document divulguent seulement des films dont au moins une des couches est constituée de PVDF homopolymère.

Avantageusement, le film selon l'invention a une largeur de 1 à 7 m. Lorsque le film a une largeur de 5,5 m minimum, il permet une utilisation comme film de couverture de serre en une seule pièce (non soudé).

Par ailleurs et de manière caractéristique, le film de l'invention présente de bonnes propriétés optiques, ayant notamment une transmission totale supérieure à 60%. La transmission totale est mesurée suivant la norme ASTM D 1003.

Les films de l'invention peuvent être soumis à un test normalisé de déchirure: méthode ELMENDORF - Norme ISO 6383/2 - 1983(F). Selon ce test, on effectue des mesures de résistance à la déchirure dans les directions diagonales définies précédemment (±45 degrés par rapport à la direction longitudinale). Le critère retenu est la valeur absolue de la différence entre la résistance à la déchirure dans l'une des directions diagonales et la résistance à la déchirure dans l'autre direction diagonale (ΔRD45). Les films décrits ici ont une résistance à la déchirure mesurée dans le sens de l'extrusion supérieure à 5 g/µm telle que mesurée par la méthode ELMENDORF.

Selon un autre aspect, l'invention concerne les procédés de préparation de films décrits ci-dessus. Ceux-ci peuvent être obtenus par soufflage de gaine ou par la technique du film coulé, ces techniques permettant avantageusement d'obtenir des films de largeurs importantes. Les films peuvent être extrudés à une température comprise entre 240 et 260°C. Le taux de gonflage doit être compris en 2, 3 et 3. Le taux d'étirage doit lui être compris entre 2 et 7.

Les exemples qui suivent illustrent l'invention. Dans ces exemples ont été utilisés comme copolymères de VDF les produits suivants :
- Kynar Flex 2500-20, ayant une température de cristallisation ou Tc de 79°C et un module élastique E de 220 Mpa;
- Kynar Flex 2800-00, ayant une Tc de 111°C et un module élastique de 650 Mpa.

Les Tc ont été mesurées par DSC ou calorimétrie différentielle à balayage. Les modules élastiques ont été mesurés par le test ISO 178.

### Exemple 1 : (suivant l'invention) ratio 80% 2800, 20% 2500

Sur une extrudeuse 7 couches, on introduit du Kynar Flex 2800-00 (MFR = 5 à 230°C sous 12,5 kg) et du Kynar SuperFlex 2500-20 (MFR = 7 à 230°C sous 3,8 kg) de la société ARKEMA en introduisant dans les extrudeuses 1, 2, 6 et 7 du Kynar Flex 2800 et du Kynar Super Flex 2500 -20 dans les extrudeuses 3,4 et 5. Cela permet d'obtenir un film tricouche avec en couche N°1 (extrudeuses 1 et 2) du 2800-00 d'épaisseur 40µm, du 2500 - 20 d'épaisseur 20µm (extrudeuses 3,4 et 5) en couche N°2 et du 2800-00 d'épaisseur 40 µm (extrudeuses 6 et 7) pour la couche N°3. Ce film est extrudé à une température de 250°C, une vitesse de ligne de 7m/minute, un taux d'étirage (DDR) de 4 un taux de gonflage (BUR) de 2,65. Ce film est ensuite testé en résistance à la déchirure dans le sens travers et dans le sens long selon la méthode ELMENDORF. Dans le sens long la valeur obtenue est de 8 g/µm et de 25 g/µm dans le sens travers. Une mesure de transmission totale de lumière est réalisée sur le film de 100 µm, la valeur de 93% est obtenue. La valeur d'allongement à rupture dans les deux directions est supérieure à 300 % lorsqu'elle est mesurée à 23°C à une vitesse de traverse de 50 mm/minute. Ce film est testé de nouveau en déchirure après avoir passé 1 semaine à 40°C dans une étuve ventilée, Les valeurs dans le sens long et dans le sens travers ont conservé 90% de leur valeur initiale.

### Exemple 2: (suivant l'invention) ratio 80% 2800, 20% 2500

Sur une extrudeuse 7 couches, on introduit du Kynar Flex 2800-00 (MFR = 5 à 230°C sous 12,5 kg) et du Kynar SuperFlex 2500-20 (MFR = 7 à 230°C sous 3,8 kg) de la société ARKEMA en introduisant dans les extrudeuses 1, 4, et 7du Kynar Flex 2800 et du Kynar Super Flex 2500 -20 dans les extrudeuses 2 , 3, 5.et 6 Cela permet d'obtenir un film 5 couches avec en couche N°1 (extrudeuse 1) du 2800-00 d'épaisseur 30µm, du 2500 - 20 d'épaisseur 10µm (extrudeuses 2 et 3) en couche N°2, du 2800-00 d'épaisseur 20 µm (extrudeuses 4) en couche N°3, du 2500-20 d'épaisseur 10 µm (extrudeuses 5 et 6) en couche N°4 et du 2800-00 (extrudeuse 7) d'épaisseur 30 µm en couche N°5. Ce film est extrudé à une température de 250°C, une vitesse de ligne de 7m/minute, un taux d'étirage (DDR) de 4 un taux de gonflage (BUR) de 2,65. Ce film est ensuite testé en résistance à la déchirure dans le sens travers et dans le sens long selon la méthode ELMENDORF. Dans le sens long la valeur obtenue est de 14 g/µm et de 26 g/µm dans le sens travers. Une mesure de transmission totale de lumière est réalisée sur le film de 100 µm, la valeur de 93% est obtenue. La valeur d'allongement à rupture dans les deux directions est supérieure à 300 % lorsqu'elle est mesurée à 23°C à une vitesse de traverse de 50 mm/minute. Ce film est testé de nouveau en déchirure après avoir passé 1 semaine à 40°C dans une étuve ventilée, Les valeurs dans le sens long et dans le sens travers ont conservé 90% de leur valeur initiale.

### Exemple 3: (suivant l'invention) ratio 80% 2800, 20% 2500

Sur une extrudeuse 7 couches, on introduit du Kynar Flex 2800-00 (MFR = 5 à 230°C sous 12,5 kg) et du Kynar SuperFlex 2500-20 (MFR = 7 à 230°C sous 3,8 kg) de la société ARKEMA en introduisant dans les extrudeuses 1, 3, 5 et 7du Kynar Flex 2800 et du Kynar Super Flex 2500 -20 dans les extrudeuses 2 , 4 et 6 Cela permet d'obtenir un film 7 couches avec en couche N°1 (extrudeuse 1) du 2800-00 d'épaisseur 30µm, du 2500 - 20 d'épaisseur 5µm (extrudeuse 2) en couche N°2, du 2800-00 d'épaisseur 10 µm (extrudeuse 3) en couche N°3, du 2500-20 d'épaisseur 10 µm (extrudeuse 4) en couche N°4, du 2800-00 d'épaisseur 10 µm (extrudeuse 5)en couche N°5, du 2500-20 d'épaisseur 5 µm (extrudeuse 6) en couche N°6 et du 2800-00 d'épaisseur 30 µm (extrudeuse 7) en couche N°7 . Ce film est extrudé à une température de 250°C, une vitesse de ligne de 7m/minute, un taux d'étirage (DDR) de 4 un taux de gonflage (BUR) de 2,65. Ce film est ensuite testé en résistance à la déchirure dans le sens travers et dans le sens long selon la méthode ELMENDORF. Dans le sens long la valeur obtenue est de 20 g/µ et de 28 g/µm dans le sens travers. Une mesure de transmission totale de lumière est réalisée sur le film de 100 µm, la valeur de 93% est obtenue. La valeur d'allongement à rupture dans les deux directions est supérieure à 300 % lorsqu'elle est mesurée à 23°C à une vitesse de traverse de 50 mm/minute. Ce film est testé de nouveau en déchirure après avoir passé 1 semaine à 40°C dans une étuve ventilée, Les valeurs dans le sens long et dans le sens travers ont conservé 90% de leur valeur initiale.

### Exemple 4 : (comparatif) 100% de 2800

Sur une extrudeuse 7 couches, on introduit du Kynar Flex 2800-00 (MFR = 5 à 230°C sous 12,5 kg) de la société ARKEMA en introduisant dans les extrudeuses 1, 2, 3, 4, 5, 6 et 7 du Kynar Flex 2800-00. Cela permet d'obtenir un film monocouche de 100 µm d'épaisseur. Ce film est extrudé à une température de 250°C, une vitesse de ligne de 7m/minute, un taux d'étirage (DDR) de 4 un taux de gonflage (BUR) de 2,65. Ce film est ensuite testé en résistance à la déchirure dans le sens travers et dans le sens long selon la méthode ELMENDORF. Dans le sens long la valeur obtenue est de 2 g/µm et de 30 g/µm dans le sens travers. Une mesure de transmission totale de lumière est réalisée sur le film de 100 µm, la valeur de 93% est obtenue. La valeur d'allongement à rupture dans les deux directions est supérieure à 300 % lorsqu'elle est mesurée à 23°C à une vitesse de traverse de 50 mm/minute. Ce film est testé de nouveau en déchirure après avoir passé 1 semaine à 40°C dans une étuve ventilée, Les valeurs dans le sens long et dans le sens travers ont conservé 90% de leur valeur initiale.

### Exemple 5 : (Comparatif) mélange 95% 2800 + 5% PMMA V046

Sur une extrudeuse 7 couches, on introduit un mélange de PMMA V046 à 5% en masse et de Kynar Flex 2800-00 (MFR = 5 à 230°C sous 12,5 kg) à 95% en masse, le PMMA et le PVDF sont de la société ARKEMA en introduisant dans les extrudeuses 1, 2, 3, 4, 5, 6 et 7 ce mélange. Cela permet d'obtenir un film monocouche de 100 µm d'épaisseur. Ce film est extrudé à une température de 250°C, une vitesse de ligne de 7m/minute, un taux d'étirage (DDR) de 4 un taux de gonflage (BUR) de 2,65. Ce film est ensuite testé en résistance à la déchirure dans le sens travers et dans le sens long selon la méthode ELMENDORF. Dans le sens long la valeur obtenue est de 10 g/µm et de 25 g/µm dans le sens travers. Une mesure de transmission totale de lumière est réalisée sur le film de 100 µm, la valeur de 93% est obtenue. La valeur d'allongement à rupture dans les deux directions est supérieure à 300 % lorsqu'elle est mesurée à 23°C à une vitesse de traverse de 50 mm/minute. Ce film est testé de nouveau en déchirure après avoir passé 1 semaine à 40°C dans une étuve ventilée, la valeur dans le sens travers a conservée 90% de sa valeur initiale en revanche la valeur dans le sens long ne représente plus que 30% de sa valeur initiale.

### Exemple 6 : (selon l'invention) ratio 90% 2800, 10% 2500

Sur une extrudeuse 7 couches, on introduit du Kynar Flex 2800-00 (MFR = 5 à 230°C sous 12,5 kg) et du Kynar SuperFlex 2500-20 (MFR = 7 à 230°C sous 3,8 kg) de la société ARKEMA en introduisant dans les extrudeuses 1, 4, et 7du Kynar Flex 2800 et du Kynar Super Flex 2500 -20 dans les extrudeuses 2 , 3, 5.et 6 Cela permet d'obtenir un film 5 couches avec en couche N°1 (extrudeuse 1) du 2800-00 d'épaisseur 30µm, du 2500 - 20 d'épaisseur 5 µm (extrudeuses 2 et 3) en couche N°2, du 2800-00 d'épaisseur 30 µm (extrudeuses 4) en couche N°3, du 2500-20 d'épaisseur 5 µm (extrudeuses 5 et 6) en couche N°4 et du 2800-00 (extrudeuse 7) d'épaisseur 30 µm en couche N°5. Ce film est extrudé à une température de 250°C, une vitesse de ligne de 7m/minute, un taux d'étirage (DDR) de 4 un taux de gonflage (BUR) de 2,65. Ce film est ensuite testé en résistance à la déchirure dans le sens travers et dans le sens long selon la méthode ELMENDORF. Dans le sens long la valeur obtenue est de 5 g/µm et de 25 g/µm dans le sens travers. Une mesure de transmission totale de lumière est réalisée sur le film de 100 µm, la valeur de 93% est obtenue. La valeur d'allongement à rupture dans les deux directions est supérieure à 300 % lorsqu'elle est mesurée à 23°C à une vitesse de traverse de 50 mm/minute. Ce film est testé de nouveau en déchirure après avoir passé 1 semaine à 40°C dans une étuve ventilée, Les valeurs dans le sens long et dans le sens travers ont conservé 90% de leur valeur initiale.

### Exemple 7 : (selon l'invention) ratio 70% 2800, 30 % 2500

Sur une extrudeuse 7 couches, on introduit du Kynar Flex 2800-00 (MFR = 5 à 230°C sous 12,5 kg) et du Kynar SuperFlex 2500-20 (MFR = 7 à 230°C sous 3,8 kg) de la société ARKEMA en introduisant dans les extrudeuses 1, 4, et 7du Kynar Flex 2800 et du Kynar Super Flex 2500 -20 dans les extrudeuses 2 , 3, 5.et 6 Cela permet d'obtenir un film 5 couches avec en couche N°1 (extrudeuse 1) du 2800-00 d'épaisseur 20µm, du 2500 - 20 d'épaisseur 15 µm (extrudeuses 2 et 3) en couche N°2, du 2800-00 d'épaisseur 30 µm (extrudeuses 4) en couche N°3, du 2500-20 d'épaisseur 15 µm (extrudeuses 5 et 6) en couche N°4 et du 2800-00 (extrudeuse 7) d'épaisseur 20 µm en couche N°5. Ce film est extrudé à une température de 250°C, une vitesse de ligne de 7m/minute, un taux d'étirage (DDR) de 4 un taux de gonflage (BUR) de 2,65. Ce film est ensuite testé en résistance à la déchirure dans le sens travers et dans le sens long selon la méthode ELMENDORF. Dans le sens long la valeur obtenue est de 8 g/µm et de 25 g/µm dans le sens travers. Une mesure de transmission totale de lumière est réalisée sur le film de 100 µm, la valeur de 93% est obtenue. La valeur d'allongement à rupture dans les deux directions est supérieure à 300 % lorsqu'elle est mesurée à 23°C à une vitesse de traverse de 50 mm/minute. Ce film est testé de nouveau en déchirure après avoir passé 1 semaine à 40°C dans une étuve ventilée, Les valeurs dans le sens long et dans le sens travers ont conservé 90% de leur valeur initiale.

### Exemple 8 : (comparatif) structure 3 couches inversées en conservant le ratio 80% 2800 et 20% 2500

Sur une extrudeuse 7 couches, on introduit du Kynar Flex 2800-00 (MFR = 5 à 230°C sous 12,5 kg) et du Kynar SuperFlex 2500-20 (MFR = 7 à 230°C sous 3,8 kg) de la société ARKEMA en introduisant dans les extrudeuses 1, 2, 6 et 7 du Kynar Flex 2500 et du Kynar Super Flex 2800 -00 dans les extrudeuses 3,4 et 5. Cela permet d'obtenir un film tricouche avec en couche N°1 (extrudeuses 1 et 2) du 2500-00 d'épaisseur 10µm, du 2800 - 00 d'épaisseur 80µm (extrudeuses 3,4 et 5) en couche N°2 et du 2500-20 d'épaisseur 10 µm (extrudeuses 6 et 7) pour la couche N°3. Ce film est extrudé à une température de 250°C, une vitesse de ligne de 7m/minute, un taux d'étirage (DDR) de 4 un taux de gonflage (BUR) de 2,65. Ce film est ensuite testé en résistance à la déchirure dans le sens travers et dans le sens long selon la méthode ELMENDORF. Dans le sens long la valeur obtenue est de 3 g/µm et de 7 g/µm dans le sens travers. Une mesure de transmission totale de lumière est réalisée sur le film de 100 µm, la valeur de 93% est obtenue. La valeur d'allongement à rupture dans les deux directions est supérieure à 300 % lorsqu'elle est mesurée à 23°C à une vitesse de traverse de 50 mm/minute. Ce film est testé de nouveau en déchirure après avoir passé 1 semaine à 40°C dans une étuve ventilée, Les valeurs dans le sens long et dans le sens travers ont conservé 90% de leur valeur initiale.

## Revendications

1. Film fluoré multicouche comprenant au moins 3 couches, dont une couche A en un premier copolymère de fluorure de vinylidène ayant une température de cristallisation TcA, et une couche B en un deuxième copolymère de fluorure de vinylidène ayant une température de cristallisation TcB, TcA étant supérieure à TcB, les couches A et B étant alternes, la couche A étant placée à l'extérieur et la couche B entre deux couches A, la couche A étant un copolymère VF2/HFP ayant une température de fusion d'au moins 140°C, et la couche B un copolymère VF2/HFP ayant une température de fusion inférieure à 125°C, ledit film ayant une transmission totale supérieure à 60% comme mesurée par la norme ASTM D 1003.

2. Film multicouche selon la revendication 1, dans lequel la couche A ayant un module élastique E_{A} et la couche B ayant un module élastique E_{B}, E_{A} a une valeur supérieure à E_{B}.

3. Film selon l'une des revendications 1 ou 2, de structure A-B-A ou A-B-A-B-A ou A-B-A-B-A-B-A.

4. Film selon l'une quelconque des revendications 1 à 3, ledit film étant exempt d'acrylate ou d'oléfine.

5. Film selon l'une quelconque des revendications 1 à 4 ayant une épaisseur de 5 à 1000 µm, dans lequel la couche A a une épaisseur de 5 à 250 µm et la couche B a une épaisseur de 1 à 50 µm.

6. Film selon la revendication 5 ayant une épaisseur de 50 à 200 µm, dans laquelle la couche A à une épaisseur comprise entre 20 et 50 µm et la couche B à une épaisseur comprise entre 5 et 50 µm

7. Film selon l'une quelconque des revendications 1 à 6 ayant une largeur de 1 à 7 m.

8. Film selon l'une quelconque des revendications 1 à 7 ayant un taux massique de couche B compris entre 5 et 50%, de préférence compris entre 10 et 35%.

9. Film selon l'une quelconque des revendications 1 à 8 en une seule pièce ayant une largeur minimum de 5,5 m.

10. Utilisation du film selon l'une des revendications 1 à 9 comme matériau de couverture agricole notamment comme couverture de serres.

11. Procédé de fabrication du film selon l'une des revendications 1 à 9 par soufflage de gaine.

12. Procédé de fabrication du film selon l'une des revendications 1 à 9 par la technique du film coulé.

## Patentansprüche

1. Mehrlagige fluorhaltige Folie, die zumindest 3 Schichten aufweist, darunter eine Schicht A eines ersten Vinylidenfluorid-Copolymers, das eine Kristallisationstemperatur TcA aufweist, und eine Schicht B eines zweiten Vinylidenfluorid-Copolymers, das eine Kristallisationstemperatur TcB aufweist, wobei TcA höher als TcB ist, sich die Schichten A und B abwechseln, die Schicht A außen und die Schicht B zwischen zwei Schichten A angeordnet ist und die Schicht A aus einem VF2/HFP-Copolymer mit einer Schmelztemperatur von mindestens 140 °C und die Schicht B aus einem VF2/HFP-Copolymer mit einer Schmelztemperatur unter 125 °C gebildet ist, wobei die Folie eine gemäß der Norm ASTM D 1003 gemessene Gesamtransmission von mehr als 60 % aufweist.

2. Mehrlagige Folie nach Anspruch 1, wobei die Schicht A einen Elastizitätsmodul E_{A} und die Schicht B einen Elastizitätsmodul E_{B} aufweist, wobei der Wert von E_{A} größer als der Wert von E_{B} ist.

3. Folie nach einem der Ansprüche 1 oder 2 der Struktur A-B-A oder A-B-A-B-A oder A-B-A-B-A-B-A.

4. Folie nach einem der Ansprüche 1 bis 3, wobei die Folie kein Acrylat oder Olefin enthält.

5. Folie nach einem der Ansprüche 1 bis 4, die eine Dicke von 5 bis 1000 µm aufweist, wobei die Schicht A eine Dicke von 5 bis 250 µm und die Schicht B eine Dicke von 1 und 50 µm aufweist.

6. Folie nach Anspruch 5, die eine Dicke von 50 bis 200 µm aufweist, wobei die Schicht A eine Dicke zwischen 20 und 50 µm und die Schicht B eine Dicke zwischen 5 und 50 µm aufweist.

7. Folie nach einem der Ansprüche 1 bis 6, die eine Breite von 1 bis 7 m aufweist.

8. Folie nach einem der Ansprüche 1 bis 7, die die Schicht B in einem Gewichtsanteil zwischen 5 und 50 % und vorzugsweise zwischen 10 und 35 % enthält.

9. Folie nach einem der Ansprüche 1 bis 8, die einstückig ist und eine minimale Breite von 5,5 m aufweist.

10. Verwendung einer Folie nach einem der Ansprüche 1 bis 9 als landwirtschaftliches Abdeckmaterial, insbesondere als Gewächshausabdeckung.

11. Verfahren zur Herstellung einer Folie nach einem der Ansprüche 1 bis 9 durch Blasformen.

12. Verfahren zur Herstellung einer Folie nach einem der Ansprüche 1 bis 9 durch eine Gießfolientechnik.

## Claims

1. Multilayer fluorinated film comprising at least three layers, including a layer A made of a first vinylidene fluoride copolymer with a crystallization temperature TcA, and a layer B made of a second vinylidene fluoride copolymer with a crystallization temperature TcB, TcA being greater than TcB, layers A and B being alternating, layer A being placed to the exterior and layer B between two layers A, in which layer A is a VF2/HFP copolymer with a melting point of at least 140°C, and layer B is a VF2/HFP copolymer with a melting point of less than 125°C, said film having a total transmission of greater than 60% as measured by standard ASTM D 1003.

2. Multilayer film according to Claim 1, in which layer A having an elastic modulus E_{A} and layer B having an elastic modulus E_{B}, E_{A} has a higher value than E_{B}.

3. Film according to either of Claims 1 and 2, of structure A-B-A or A-B-A-B-A or A-B-A-B-A-B-A.

4. Film according to any one of Claims 1 to 3, the said film being free of acrylate or of olefin.

5. Film according to any one of Claims 1 to 4, with a thickness of from 5 to 1000 µm, in which layer A has a thickness of from 5 to 250 µm and layer B has a thickness of from 1 to 50 µm

6. Film according to Claim 5, with a thickness of from 50 to 200 µm, in which layer A has a thickness of between 20 and 50 µm and layer B has a thickness of between 5 and 50 µm.

7. Film according to any one of Claims 1 to 6, with a width of from 1 to 7 m.

8. Film according to any one of Claims 1 to 7, with a mass content of layer B of between 5% and 50% and preferably between 10% and 35%.

9. Film according to any one of Claims 1 to 8, made in one piece with a minimum width of 5.5 m.

10. Use of the film according to one of Claims 1 to 9, as an agricultural covering material, especially as a greenhouse covering.

11. Process for manufacturing the film according to one of Claims 1 to 9 by tubular film blowing.

12. Process for manufacturing the film according to one of Claims 1 to 9 via the cast film technique.
